# EUROPÄISCHE PATENTANMELDUNG

(11) **EP 1 243 174 A1**
(43) Veröffentlichungstag der Anmeldung: **25.09.2002**
(21) Anmeldenummer: 02005832.7
(22) Anmeldetag: 14.03.2002
(51) Int. Cl.: A01D 41/12

(54) **Mähdrescher mit Feuchtigkeitssensor**

(30) Priorität: 20.03.2001 US 812810
(71) Anmelder: DEERE & COMPANY, Moline, Illinois 61265-8098 (US)
(72) Erfinder: Coers, Bruce Alan, Hillsdale, IL 61257 (US); Burke, Daniel James, Cordova, IL 61242 (US); Cooper, William F., Fargo, ND 58102 (US); Littke, Jerry Dean, Hillsboro, ND 58045 (US); Mertins, Karl-Heinz, Davenport, IA 52807 (US)
(74) Vertreter: Holst, Sönke, Dr.

(57) **Zusammenfassung**

Die Erfindung bezieht sich auf einen Mähdrescher (10) mit im Eingriff mit dem Erdboden befindlichen Mitteln, die eingerichtet sind, den Mähdrescher (10) mit einer Erntegeschwindigkeit über den Erdboden zu bewegen, einer Drescheinrichtung, einem Schrägförderer (18), der eingerichtet ist, geerntetes Gut der Drescheinrichtung zuzuführen, und mit einem Feuchtigkeitssensor (92) zur Messung der Feuchtigkeit des den Schrägförderer (18) durchlaufenden, geernteten Guts, der ein Feuchtigkeitssignal bereitstellt.

Es wird vorgeschlagen, dass eine zum Einstellen der Erntegeschwindigkeit eingerichtete Steuerung (80) das Feuchtigkeitssignal erhält und das Feuchtigkeitssignal zum Einstellen der Erntegeschwindigkeit verwendet.

## Beschreibung

Die Erfindung betrifft einen Mähdrescher mit im Eingriff mit dem Erdboden befindlichen Mitteln, die eingerichtet sind, den Mähdrescher mit einer Erntegeschwindigkeit über den Erdboden zu bewegen, einer Drescheinrichtung, einem Schrägförderer, der eingerichtet ist, geerntetes Gut der Drescheinrichtung zuzuführen, und mit einem Feuchtigkeitssensor zur Messung der Feuchtigkeit des den Schrägförderer durchlaufenden, geernteten Guts, der ein Feuchtigkeitssignal bereitstellt.

Landwirtschaftliche Mähdrescher sind große Maschinen, die landwirtschaftliches Gut ernten, dreschen, trennen und reinigen. Das gewonnene saubere Korn wird in einem am Mähdrescher angeordneten Korntank gespeichert. Das saubere Korn kann dann vom Korntank durch einen Entladeschneckenförderer einem Lastwagen, Anhänger oder anderem Aufnahmegefäß zugeführt werden.

Eine Erntegutaufnahmeeinrichtung am vorderen Ende des Mähdreschers erntet das Gut. Das geerntete Gut wird einem Schrägförderer zugeführt, um es an eine Drescheinrichtung abzugeben. Die Drescheinrichtung kann entweder eine konventionelle, quer angeordnete Dreschtrommel und ein Dreschkorb sein, oder ein Dreschrotor. Der Dreschrotor kann axial oder quer angeordnet sein.

In der Regel werden Erntegutfeuchtigkeitssensoren verwendet, um die Feuchtigkeit geernteten Korns zu messen. Kapazitive Erntegutfeuchtigkeitssensoren wurden im Elevator für sauberes Korn, verschiedenen Schneckenförderern für sauberes Korn oder im Korntank angeordnet. Bei einem vorgeschlagenen System ist ein Feuchtigkeitssensor an einem Schneidwerk angebracht. Sein Feuchtigkeitssignal wird verwendet, um die Fahrgeschwindigkeit des Mähdreschers zu steuern, s. JP 5-207813 A. Bei einer anderen Ausführungsform ist der Feuchtigkeitssensor am Boden des Schrägförderers befestigt, s. US 6 185 990.

Die der Erfindung zugrunde liegende Aufgabe wird darin gesehen, einen verbesserten Erntegutfeuchtigkeitssensor für einen Mähdrescher bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein landwirtschaftlicher Mähdrescher ist mit einer Steuerung versehen, welche die Erntegeschwindigkeit des Mähdreschers als Funktion wenigstens eines Eingangswerts steuert. Als Eingangswert dient ein Feuchtigkeitssignal, das der Steuerung zugeführt wird. Es wird von einem Feuchtigkeitssensor erzeugt, der im Schrägförderer des Mähdreschers angeordnet ist. Der Feuchtigkeitssensor kommt betriebsmäßig mit dem Erntegut in Kontakt, das den Schrägförderer durchläuft. Das Feuchtigkeitssignal spiegelt den Feuchtigkeitsgehalt des geernteten Guts wieder, bevor es in die Drescheinrichtung eintritt. Das Feuchtigkeitssignal wird der elektronischen Steuerung zugeführt und dient zur Steuerung der Vortriebsgeschwindigkeit.

Auf diese Weise erreicht man eine Berücksichtigung des Feuchtigkeitsgehalts des Ernteguts bei der Steuerung der Erntegeschwindigkeit des Mähdreschers. Die Feuchtigkeit wird an einer Stelle gemessen, an der besonders exakte Messwerte erzielt werden.

Die Erntegeschwindigkeit wird in der Regel auch in Abhängigkeit vom jeweiligen Erntegutdurchsatz gesteuert, der auf beliebige Art gemessen werden kann. Es kann ein Durchsatzsensor Verwendung finden, der den Hydraulikdruck misst, der zum Verstellen eines Antriebselements der Drescheinrichtung dient. Alternativ oder zusätzlich wird ein Durchsatzsensor benutzt, der eingerichtet ist, die Kraft zu messen, die das im Schrägförderer geförderte Gut auf letzteren ausübt. Ein derartiger Durchsatzsensor kann mit einem Fühler die Position einer Trommel des Schrägförderers erfassen, die vertikal beweglich gelagert und vom Gut anhebbar ist. Stößt diese Trommel am Ende ihres Bewegungsbereichs an einen Anschlag, kann ein zweiter Fühler die vom Gut auf die Trommel ausgeübte Kraft erfassen. Die Signale beider Fühler werden zu einem Durchsatzsignal kombiniert.

Das Feuchtigkeitssignal kann verwendet werden, ein Signal zu verändern, das eine Information über den gewünschten Durchsatz und/oder den aktuellen Durchsatz enthält.

Zusätzlich oder alternativ kann das Feuchtigkeitssignal verwendet werden, die Geschwindigkeit des Mähdreschers schnell zu verändern, wenn das Feuchtigkeitssignal bestimmte, festgelegte Grenzen verlässt oder sich die Feuchtigkeit im Vergleich mit vorherigen Ablesungen drastisch ändert. Wenn der Mähdrescher beispielsweise in einen grünen, unkrauthaltigen Bereich auf dem Feld hineinfährt, würde der Feuchtigkeitssensor Erntegut mit hoher Feuchtigkeit signalisieren, so dass die Steuerung den Mähdrescher baldigst verlangsamt, um diese schwere Belastung besser aufnehmen zu können. In ähnlicher Weise würde die Steuerung den Mähdrescher automatisch beschleunigen, wenn er wieder in Erntegutbestände mit normaleren Bedingungen hineinfährt. Wie oben dargelegt, kann das Feuchtigkeitssignal verwendet werden, mindestens eines der Gutdurchsatzsignale zu verändern und/oder mit einem festgelegten Feuchtigkeitsgrenzwert verglichen werden, um die normale Durchsatzsteuerung zu übersteuern, die auf dem aktuellen Hydraulikdruck des verstellbaren Antriebs beruht.

Als Feuchtigkeitssensor ist vorzugsweise ein kapazitiver Sensor vorgesehen.

In den Zeichnungen ist ein nachfolgend näher beschriebenes Ausführungsbeispiel der Erfindung dargestellt. Es zeigt:
- Fig. 1: eine halbschematische Seitenansicht eines landwirtschaftlichen Mähdreschers, und

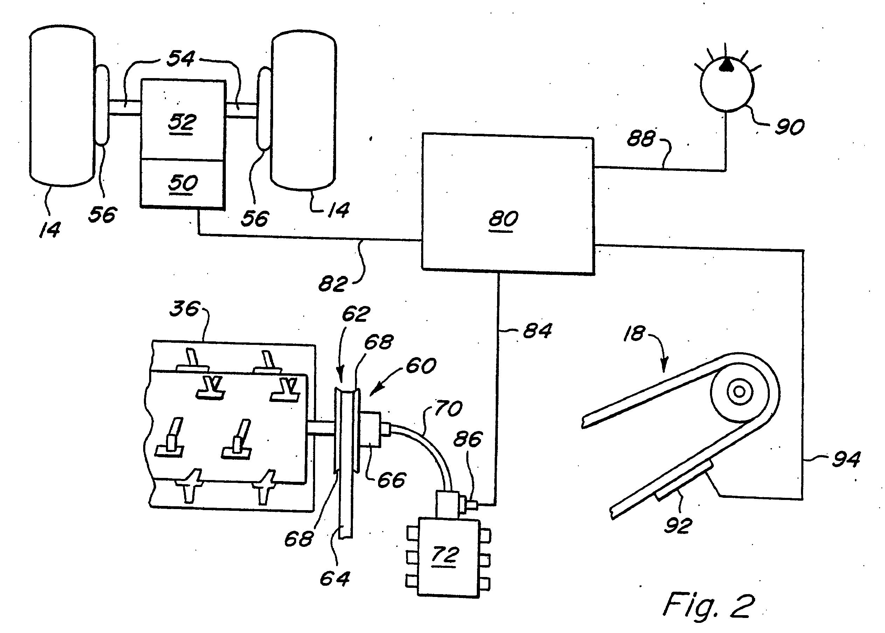

- Fig. 2: ein Schema eines erfindungsgemäßen Durchsatzsteuerungssystems.

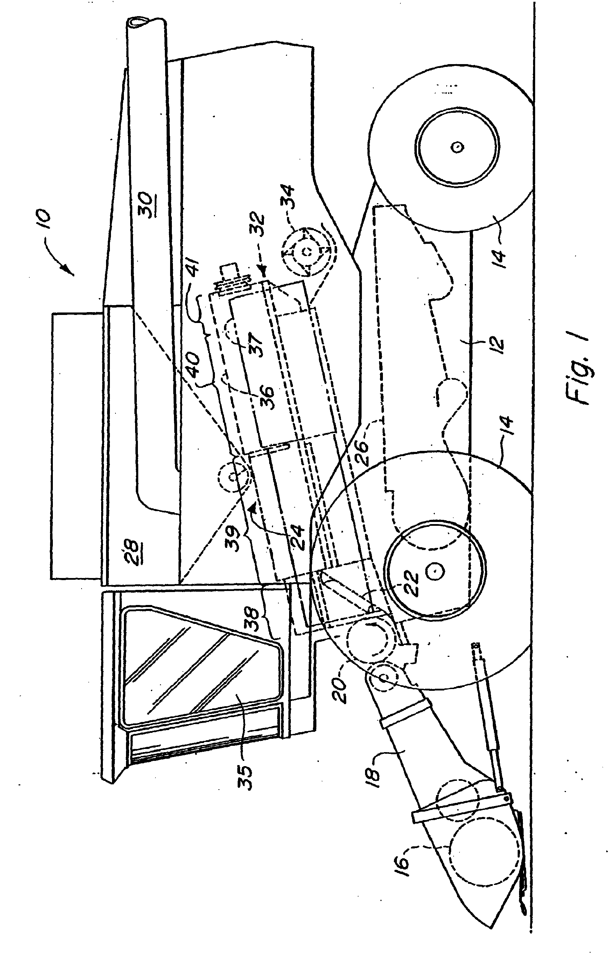

Die Figur 1 zeigt einen landwirtschaftlichen Mähdrescher 10 mit einer tragenden Struktur 12, die mit im Eingriff mit dem Erdboden stehenden Rädern 14 versehen ist. Obwohl der Mähdrescher 10 mit Rädern dargestellt ist, könnte er auch mit zwei oder vier Gleisketten versehen sein. Ein Schneidwerk 16 wird zum Ernten von Erntegut und um es einem Schrägförderer 18 zuzuführen benutzt. Der Schrägförderer 18 enthält eine Fördereinrichtung, um das geerntete Gut einer Leittrommel 20 zuzuführen. Die Leittrommel 20 führt das Gut nach oben durch einen Einlassübergangsabschnitt 22 hindurch und einer drehbaren, zum Dreschen und Trennen eingerichteten Gutbearbeitungseinrichtung 24 zu. Die dargestellte Gutbearbeitungseinrichtung 24 ist im Mähdrescher axial angeordnet, sie könnte aber auch in anderen Orientierungen relativ zur Längsachse des Mähdreschers 10 angeordnet sein. Obwohl die vorliegende Erfindung anhand einer Gutbearbeitungseinrichtung 24 mit einem Rotor beschrieben wird, könnte sie auch an einem Mähdrescher 10 mit einer konventionellen, quer angeordneten Dreschtrommel, die mit einem Dreschkorb zusammenwirkt, verwendet werden.

Die Gutbearbeitungseinrichtung 24 drischt und trennt das geerntete Gut. Das Korn und die Spreu fallen durch Roste am Boden der Gutbearbeitungseinrichtung 24 in ein Reinigungssystem 26. Das Reinigungssystem 26 entfernt die Spreu und führt das saubere Korn einem (nicht gezeigten) Elevator für sauberes Korn zu. Der Elevator für sauberes Korn legt das Korn in einem Korntank 28 ab. Das saubere Korn im Korntank 28 kann durch einen Entladeschneckenförderer 30 einem Lastwagen oder Anhänger zugeführt werden.

Ausgedroschenes, vom Korn befreites Stroh wird von der Gutbearbeitungseinrichtung 24 durch einen Auslass 32 einer Auswurftrommel 34 zugeführt. Die Auswurftrommel 34 stößt das Stroh wiederum an der Rückseite des Mähdreschers 10 aus. Es ist anzumerken, dass die Auswurftrommel 34 das vom Korn befreite Gut auch direkt einem Strohhäcksler zuführen könnte. Der Betrieb des Mähdreschers 10 wird von einer Bedienerkabine 35 aus gesteuert.

Die Gutbearbeitungseinrichtung 24 umfasst ein zylindrisches Rotorgehäuse 36 und einen im Rotorgehäuse 36 angeordneten, drehbaren Rotor 37. Der vordere Teil des Rotors 37 und das Rotorgehäuse 36 definieren einen Beschickungsabschnitt 38. Stromab des Beschickungsabschnitts 38 sind ein Dreschabschnitt 39, ein Trennabschnitt 40 und ein Auslassabschnitt 41. Der Rotor 37 ist im Beschickungsabschnitt 38 mit einer konischen Rotortrommel versehen, die wendelförmige Beschickungselemente zum Eingreifen in Gut aufweist, das sie von der Leittrommel 20 und vom Einlassübergangsbereich 22 erhält. Unmittelbar stromab des Beschickungsabschnitts 38 befindet sich der Dreschabschnitt 39. Im Dreschabschnitt 39 weist der Rotor 37 eine zylindrische Rotortrommel auf, die mit einer Anzahl von Dreschelementen versehen ist, um das vom Beschickungsabschnitt 38 erhaltene Gut zu dreschen. Stromab des Dreschabschnitts 39 befindet sich der Trennabschnitt 40, in dem das im gedroschenen Gut noch enthaltene Korn freigesetzt wird und durch ein bodenseitiges Rost im Rotorgehäuse 36 hindurch in das Reinigungssystem 28 fällt. Der Trennabschnitt 40 geht in den Auslassabschnitt 41 über, in dem das vom Korn befreite Gut (Stroh) aus der Gutbearbeitungseinrichtung 24 ausgestoßen wird.

Die vorderen Räder 14 des Mähdreschers 10 werden durch ein hydrostatisches Getriebe 50 angetrieben. Das hydrostatische Getriebe 50 wird auf konventionelle Weise durch einen nicht gezeigten Verbrennungsmotor angetrieben. Das hydrostatische Getriebe 50 treibt wiederum ein Schaltgetriebe 52 an. Zwei treibende Wellen 54 erstrecken sich vom Schaltgetriebe 52 nach außen und treiben Endantriebe 56 der vorderen Räder 14 an. Das hydrostatische Getriebe 50 umfasst eine Pumpeneinheit und eine Motoreinheit. Die Pumpeneinheit und/oder die Motoreinheit sind mit einstellbaren Taumelplatten ausgestattet. Die einstellbaren Taumelplatten steuern die Ausgangsgeschwindigkeit des Getriebes 50 und dessen Drehrichtung. Elektromagnetisch gesteuerte Steuerventile steuern die Positionen der Taumelplatten. Die lenkbaren hinteren Räder 14 können auch durch Radmotore angetrieben werden, die direkt an den Rädern 14 befestigt sind. Die Geschwindigkeit der Radmotore kann durch das unten beschriebene Durchsatzsteuerungssystem gesteuert werden.

Ein verstellbarer Antrieb 60 mit variablem Drehmoment treibt den Rotor 37 an. Derselbe Verbrennungsmotor, der auch das hydrostatische Getriebe 50 antreibt, treibt auch den verstellbaren Antrieb 60 an. Der verstellbare Antrieb 60 ist ein Riementrieb, der eine nicht gezeigte antreibende Riemenscheibe mit variablem Durchmesser und eine angetriebene Riemenscheibe mit variablem Durchmesser umfasst. Ein Riemen 64 erstreckt sich zwischen der antreibenden Riemenscheibe und der angetriebenen Riemenscheibe 62, um Rotationsleistung zu übertragen. Hydraulikzylinder steuern die Durchmesser der Riemenscheiben. Der Hydraulikzylinder 66 ist mit der angetriebenen Riemenscheibe 62 gekoppelt und bewegt die Stirnplatten 68 der Riemenscheibe 62 nach innen bzw. außen, um den wirksamen Durchmesser der Riemenscheibe 62 gegenüber dem Riemen 64 zu steuern. Durch eine Änderung des wirksamen Durchmessers der Riemenscheiben wird die effektive Geschwindigkeit der angetriebenen Riemenscheibe 62 geändert. Durch eine Hydraulikleitung 70 wird dem Hydraulikzylinder 66 unter Druck stehende Hydraulikflüssigkeit von einem Ventilzusammenbau 72 zugeführt. Der Rotor 37 wird durch die Riemenscheiben variablen Durchmessers mit einer konstanten, ausgewählten Rotorgeschwindigkeit angetrieben. Das vom Riemen 64 und den Riemenscheiben übertragene Drehmoment variiert mit dem Gutdurchsatz. Variationen des Durchsatzes haben Änderungen der Verlustraten zur Folge. Der Durchsatz steht direkt mit den Verlustraten in Beziehung.

Eine elektronische Steuerung 80 steuert die Erntegeschwindigkeit des Mähdreschers 10. Das bedeutet, dass die elektronische Steuerung 80 die Vorwärtsgeschwindigkeit (Erntegeschwindigkeit) des Mähdreschers 10 durch ein Einstellen der Position der Taumelplatten des hydrostatischen Getriebes 50 einstellt, indem der Betrieb der elektromagnetisch betätigten Steuerventile über eine Leitung 82 gesteuert wird. Die Steuerung 80 empfängt durch die Leitung 84 ein aktuelles Hydraulikdrucksignal von einem Hydraulikdrucksensor 86. Der Hydraulikdrucksensor 86 fühlt den Hydraulikdruck des Hydraulikzylinders 66, der den Antrieb 60 mit variablem Drehmoment verstellt. Dieses aktuelle Hydraulikdrucksignal entspricht einem Gutdurchsatzsignal, das auf den Gutdurchsatz in der Gutbearbeitungseinrichtung 24 hinweist. Somit wirkt der Hydraulikdrucksensor 86 als Gutdurchsatzsensor. Die Steuerung 80 empfängt außerdem über eine Leitung 88 von einem Schalter 90 ein Sollverlustratensignal, das eine Information über eine gewünschte Verlustrate enthält. Der Schalter 90 ist in der Bedienerkabine 35 angeordnet.

Wenn der Bediener das Durchsatzsteuerungssystem betreibt, wählt er am Schalter 90 eine gewünschte Verlustrate aus. Die Steuerung 80 empfängt dieses Sollverlustratensignal und setzt es in ein gewünschtes Hydraulikdrucksignal um. Die Steuerung 80 empfängt auch das aktuelle Hydraulikdrucksignal vom Hydraulikdrucksensor 86. Die Steuerung 80 regelt die Vorwärtsgeschwindigkeit des Mähdreschers 10, so dass das gewünschte Hydraulikdrucksignal gleich dem wirklichen Hydraulikdrucksignal ist.

Als weitere Verfeinerung des Systems ist der Schrägförderer 18 mit einem kapazitiven Feuchtigkeitssensor 92 ausgestattet, der über eine Leitung 94 mit der Steuerung 80 kommuniziert. Der Feuchtigkeitssensor 92 fühlt die Feuchtigkeit im Erntegut, das den Schrägförderer 18 durchläuft. Das Feuchtigkeitssignal kann dazu verwendet werden, das Signal über den wirklichen Hydraulikdruck oder das Signal über den gewünschten Hydraulikdruck zu verändern, um den Mähdrescher 10 zu verlangsamen, wenn er Erntegut mit hoher Feuchtigkeit aufnimmt.

Gemeinsam mit der oben beschriebenen Signaländerung oder alternativ dazu kann das Feuchtigkeitssignal benutzt werden, die Erntegeschwindigkeit des Mähdreschers 10 direkt einzustellen. Wenn das Erntegutfeuchtigkeitsniveau höher als ein festgelegter Betrag ist, wird der Mähdrescher 10 um einen bestimmten Betrag verlangsamt. Wenn der Mähdrescher 10 beispielsweise ein unkrauthaltiges, grünes Erntegut aufnimmt, wird der Feuchtigkeitssensor 92 eine gesteigerte Feuchtigkeit messen. Das Feuchtigkeitssignal wird über die Leitung 94 der Steuerung 80 zugeführt. Die dieses Signal empfangende Steuerung 80 wird zuerst feststellen, ob die Erntegutfeuchtigkeit oberhalb eines festgelegten Betrags liegt, und wenn das der Fall ist, wird die Steuerung 80 den Mähdrescher 10 sofort verlangsamen.

## Patentansprüche

1. Mähdrescher (10), mit im Eingriff mit dem Erdboden befindlichen Mitteln, die eingerichtet sind, den Mähdrescher (10) mit einer Erntegeschwindigkeit über den Erdboden zu bewegen, einer Drescheinrichtung, einem Schrägförderer (18), der eingerichtet ist, geerntetes Gut der Drescheinrichtung zuzuführen, und mit einem Feuchtigkeitssensor (92) zur Messung der Feuchtigkeit des den Schrägförderer (18) durchlaufenden, geernteten Guts, der ein Feuchtigkeitssignal bereitstellt, **dadurch gekennzeichnet, dass** eine zum Einstellen der Erntegeschwindigkeit eingerichtete Steuerung (80) das Feuchtigkeitssignal erhält und das Feuchtigkeitssignal zum Einstellen der Erntegeschwindigkeit verwendet.

2. Mähdrescher (10) nach Anspruch 1, **dadurch gekennzeichnet, dass** ein Gutdurchsatzsensor der Steuerung (80) ein Gutdurchsatzsignal zuführt, das von der Steuerung (80) bei der Einstellung der Erntegeschwindigkeit benutzt wird.

3. Mähdrescher (10) nach Anspruch 2, **dadurch gekennzeichnet, dass** das Feuchtigkeitssignal das Gutdurchsatzsignal beeinflusst.

4. Mähdrescher (10) nach Anspruch 2 oder 3, **dadurch gekennzeichnet, dass** das Feuchtigkeitssignal das Durchsatzsignal bei der Einstellung der Erntegeschwindigkeit übersteuert, wenn das Feuchtigkeitssignal über einen festgelegten Wert angestiegen ist.

5. Mähdrescher (10) nach einem der vorhergehenden Ansprüche, **dadurch gekennzeichnet, dass** der Feuchtigkeitssensor ein Kapazitätssensor ist.
